(19) Europäisches Patentamt
European Patent Office
Office européen des brevets

(11) **EP 4 358 605 A1**

(12) **EUROPEAN PATENT APPLICATION**

(43) Date of publication:
**24.04.2024 Bulletin 2024/17**

(21) Application number: **22202143.8**

(22) Date of filing: **18.10.2022**

(51) International Patent Classification (IPC):
**H04W 56/00** (2009.01)    **G01S 19/30** (2010.01)

(52) Cooperative Patent Classification (CPC):
**H04W 56/0055; G01S 19/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **BARBU, Oana-Elena**
  **9000 Aalborg (DK)**
• **YANAKIEV, Boyan**
  **2300 Copenhagen (DK)**

(74) Representative: **Whiting, Gary et al**
**Venner Shipley LLP**
**5 Stirling House**
**Stirling Road**
**The Surrey Research Park**
**Guildford GU2 7RF (GB)**

(54) **CLOCK BIAS**

(57)    A method, apparatus and computer program is described comprising: receiving or obtaining plurality of reference signals, wherein the reference signals are transmitted by a node of a mobile communication system, wherein said reference signals are associated with a clock signal; generating a clock bias model for characterising a time variable clock bias of said clock signal for said plurality of reference signals, wherein said clock bias model comprises one or more parameters; generating modelled received signals, wherein each modelled received signal is based on one of the reference signals and the time-variable clock bias; and updating the parameters of the clock bias model so that the modelled received signals approximate to corresponding received signals.

Fig. 3

**Description**

**Field**

The present specification relates to characterising a clock bias; for example, to modelling, approximating or otherwise characterising clock drift in reference signals.

**Background**

The use of reference signals (such as positioning signals) to enable a position of a user device of a mobile communication system to be determined is known. Such reference signals are vulnerable to clock drift, which can lead to positioning errors.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

In a first aspect, this specification describes an apparatus comprising: means for receiving or obtaining plurality of reference signals (e.g. a block of reference signals), wherein the reference signals are transmitted by a node of a mobile communication system (such as a transmission-reception point (TRP) or a user equipment (UE)), wherein said reference signals are associated with a clock signal; means for generating a clock bias model for characterising (e.g. approximating or modelling) a time variable clock bias (such as clock drift) of said clock signal for said plurality of reference signals, wherein said clock bias model comprises one or more parameters; means for generating modelled received signals, wherein each modelled received signal is based on one of the reference signals, a transmit power of said one of the reference signals, an estimated channel response between the node and said apparatus, and the time-variable clock bias; and means for updating the parameters of the clock bias model so that the modelled received signals approximate to corresponding received signals. The reference signals may comprise positioning reference signals (PRS), sounding reference signals (SRS), DMRS, CSI-RS, SL-PRS, or some other positioning signal.

The clock bias model may comprise a clock offset parameter. Alternatively, or in addition, the clock bias model may comprise a rate of change parameter.

The means for updating the parameters of the clock bias model may be configured to repeat the updating of said parameters until a termination condition is reached. The termination condition may include a number of iterations and/or a performance metric.

The apparatus may further comprise means for reporting a clock bias for the received reference signals. Alternatively, or in addition, the apparatus may further comprise means for reporting an anticipated clock bias for future reference signals (e.g. for a defined number of future reference signals, for example as defined by the apparatus or by a location management function). The clock bias and/or the anticipated clock bias may, for example, be reported to a location management function (LMF) or similar system.

The apparatus may further comprise means for using the clock bias model to perform at least one of: determining or reporting a clock error; or determining or reporting a positioning error associated with the plurality of reference signals.

The apparatus may further comprise means for selecting a clock bias model from one of a plurality of available clock bias models.

The apparatus may further comprise means for generating or retrieving the estimated channel response between the node and said apparatus, wherein the estimated channel response is based on a direct path estimate for a system comprising the node and said apparatus, wherein the direct path estimate is based on a geometry of said system. The apparatus may further comprise means for determining the geometry of the system.

The apparatus may further comprise a machine-learning or supervised-learning algorithm for updating the parameters of the clock bias model.

In some example embodiments, the apparatus is a unit of the mobile communication system whose location is considered known. The said unit may be a positioning and reference unit (PRU).

The said means may comprise: at least one processor; and at least one memory including computer program code. The at least one memory and computer program code may be configured to, with the at least one processor, cause the performance of the apparatus.

In a second aspect, this specification describes a method comprising: receiving or obtaining plurality of reference signals (e.g. a block of reference signals), wherein the reference signals are transmitted by a node of a mobile communication system (such as a transmission-reception point (TRP) or a user equipment (UE)), wherein said reference signals are associated with a clock signal; generating a clock bias model for characterising (e.g. approximating or modelling) a time variable clock bias (such as clock drift) of said clock signal for said plurality of reference signals, wherein said clock bias model comprises one or more parameters; generating modelled received signals, wherein each modelled received signal is based on one of the reference signals, a transmit power of said one of the reference signals, an estimated channel response between the node and said apparatus, and the time-variable clock bias; and updating the parameters of the clock bias model so that the modelled received signals approximate to corresponding received signals. The reference signals may comprise positioning reference signals (PRS), sounding reference signals (SRS), DMRS, CSI-RS, SL-PRS, or some other positioning signal.

The clock bias model may comprise a clock offset parameter. Alternatively, or in addition, the clock bias model may comprise a rate of change parameter.

Updating the parameters of the clock bias model may comprise repeating the updating of said parameters until a termination condition is reached.

The method may further comprise reporting a clock bias for the received reference signals and/or reporting an anticipated clock bias for future reference signals.

The method may further comprise using the clock bias model to perform at least one of: determining or reporting a clock error; or determining or reporting a positioning error associated with the plurality of reference signals.

The method may further comprise selecting a clock bias model from one of a plurality of available clock bias models.

The method may further comprise generating or retrieving the estimated channel response, wherein the estimated channel response is based on a direct path estimate based on a geometry of the relevant system. The method may further comprise determining the geometry of the system.

In a third aspect, this specification describes computer-readable instructions which, when executed by a computing apparatus, cause the computing apparatus to perform any method as described herein (including the method of the second aspect described above).

In a fourth aspect, this specification describes a computer-readable medium (such as a non-transitory computer-readable medium) comprising program instructions stored thereon for performing any method as described herein (including the method of the second aspect described above).

In a fifth aspect, this specification describes an apparatus comprising: at least one processor; and at least one memory including computer program code which, when executed by the at least one processor, causes the apparatus to perform (at least) any method as described herein (including the method of the second aspect described above).

In a sixth aspect, this specification describes a computer program comprising instructions for causing an apparatus to perform at least the following: receiving or obtaining plurality of reference signals, wherein the reference signals are transmitted by a node of a mobile communication system (such as a transmission-reception point (TRP) or a user equipment (UE)), wherein said reference signals are associated with a clock signal; generating a clock bias model for characterising (e.g. approximating or modelling) a time variable clock bias (such as clock drift) of said clock signal for said plurality of reference signals, wherein said clock bias model comprises one or more parameters; generating modelled received signals, wherein each modelled received signal is based on one of the reference signals, a transmit power of said one of the reference signals, an estimated channel response between the node and said apparatus, and the time-variable clock bias; and updating the parameters of the clock bias model so that the modelled received signals approximate to corresponding received signals.

Optional features of the sixth aspect may comprises any features of the second aspect.

In a seventh aspect, this specification describes: a receiver module (or some other means) for receiving or obtaining plurality of reference signals, wherein the reference signals are transmitted by a node of a mobile communication system (such as a transmission-reception point (TRP) or a user equipment (UE)), wherein said reference signals are associated with a clock signal; a model generator (or some other means) for generating a clock bias model for characterising a time variable clock bias (such as clock drift) of said clock signal for said plurality of reference signals, wherein said clock bias model comprises one or more parameters; a processor (or some other means) for generating modelled received signals, wherein each modelled received signal is based on one of the reference signals, a transmit power of said one of the reference signals, an estimated channel response between the node and said apparatus, and the time-variable clock bias; and an updating module (or some other means) for updating the parameters of the clock bias model so that the modelled received signals approximate to corresponding received signals.

**Brief description of the drawings**

Example embodiments will now be described, by way of example only, with reference to the following schematic drawings, in which:

FIG. **1** is a block diagram of a system in which embodiments described herein may be used;
FIG. 2 shows a message flow sequence in accordance with an example embodiment;

FIGS. 3 and 4 are flow charts showing algorithms in accordance with an example embodiment;

FIG. 5 is a block diagram of a system in accordance with an example embodiment;

FIGS. 6 to 8 are flow charts showing algorithms in accordance with an example embodiment;

FIG. 9 is a block diagram of components of a system in accordance with an example embodiment; and

FIG. 10 shows an example of tangible media for storing computer-readable code which when run by a computer may perform methods according to example embodiments described above.

**Detailed description**

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings, like reference numerals refer to like elements throughout.

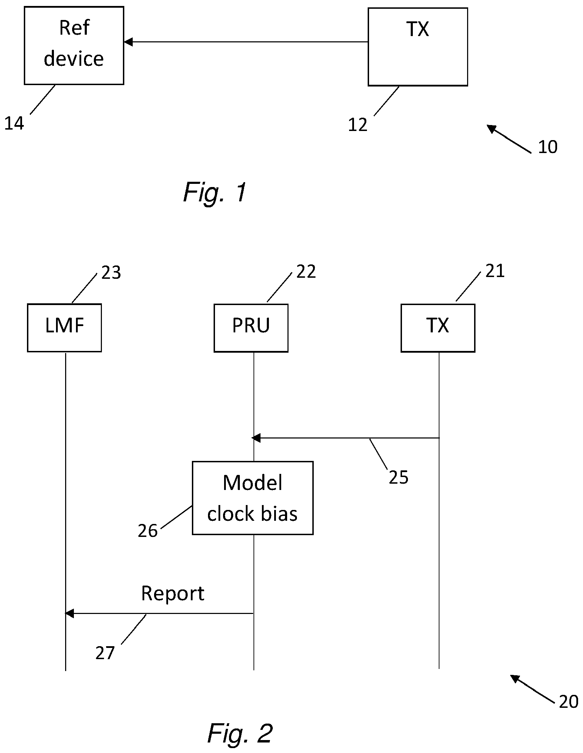

FIG. 1 is a block diagram of a system, indicated generally by the reference numeral 10, in which embodiments described herein may be used. The system 10 comprises a transmitter 12 and a reference device 14. As shown in FIG. 1, the transmitter 12 sends a reference signal that is received by the reference device 14.

The transmitter 12 is a node of a mobile communication system. The transmitter 12 may, for example, be a base station (e.g. a global Node B, gNB). Alternatively, the transmitter may be a user device (e.g. a User Equipment, UE). As discussed in detail below, the reference signal sent by the transmitter 12 (and received at the reference device 14) maybe a positioning reference signal.

The reference device 14 may be a positioning reference unit (PRU). A PRU is a 5G network entity that may be designated by the 5G NR network to assist with one or more positioning sessions. A PRU is a device or network node with known location (e.g. a road-side unit, another UE, etc.) that can be activated on demand by a location management function (LMF) to perform specific positioning operations, e.g. measurement and/or transmission of specific positioning signals.

Radio transmitters (such as New Radio (NR) transmitters) are prone to transmission errors due to clock drift. These errors distort transmit signals (such as those transmitted by transmitter 12) by introducing a transmit offset. Unless accounted for, such offsets tend to be absorbed into positioning measurements and hence tend to degrade overall positioning and ranging accuracy.

5G NR and many other communication standards use synchronization procedures to seek to correct clock drift and thus compensate for instantaneous clock offset during data reception. Such synchronization is not generally specified for positioning applications due to signalling overhead limitations. In 5G NR, Location and Positioning Protocol (LPP) makes use of synchronization procedure used for data reception to address positioning performance. However, this may not be sufficient in some scenarios.

Location and Positioning Protocol (LPP) runs independently of data reception (e.g. regardless of whether a user device (UE) is actively transmitting or receiving data). LPP may also operate in RRC inactive/idle modes. As a result, clock drift correction procedures may not be triggered at a sufficiently high rate to accommodate LPP requirements.

Positioning accuracy can be particularly important for virtual reality (VR) or extended reality (XR) applications where ranging accuracy demands can be challenging. For example, a positioning transmitter may be affected by a variable clock drift that offsets its clock by several nanoseconds over a period of tens of subframes. Unless accounted for, such clock drifts may result in a positioning measurement error in the order of metres, which is unsuitable for many VR and XR use-cases. For example, XR services may use positioning information not only for location aware rendering (where a relatively inaccurate location might be tolerable) but also for viewport dependent rendering where the exact position and even orientation of the user may be reported to the XR application as often as every 4ms.

FIG. 2 shows a message flow sequence, indicated generally by the reference numeral 20, in accordance with an example embodiment.

The message sequence 20 shows messages sent between a transmitter 21 (such as the transmitter 12), a PRU 22 (such as the reference device 14), and a location management function (LMF) 23. The transmitter 21 may be a transmission reception point (TRP), wherein downlink signals are received at the PRU 22. Alternatively, the transmitter may be a UE, wherein sidelink signals are received at the PRU 22. The principles described herein are also applicable to uplink (UL) transmissions.

As discussed in detail below, the PRU 22 can be used for estimating and predicting the clock drift of the transmitter 21. The estimate may be then used, for example, by one or more of:

- The transmitter 21 to pre-compensate its own transmissions.
- The PRU/receiver 22 to correct its own position measurements.
- The LMF 23 to account for the TX/RX errors associated with a PRS resource.

In the message sequence 20, the transmitter 21 sends a reference signal 25 (such as a positioning reference signal, PRS, a sounding reference signal, SRS, or some other positioning signal) to the PRU 22.

The PRU 22 generates a clock bias model (in operation 26). The clock bias model (which may be referred to as a clock error model) seeks to anticipate, approximate or otherwise characterize the variable clock offset associated with the transmission of reference signals received at the PRU 22 from the transmitter 21, as discussed in detail below. (Note that, as discussed further below, instantaneous estimation and prediction are both possible in various example embodiments.)

The PRU 22 then sends a report 27 to the LMF 23 based on the generated clock bias model. The report may include details of a clock error or positioning error as determined at the PRU 22.

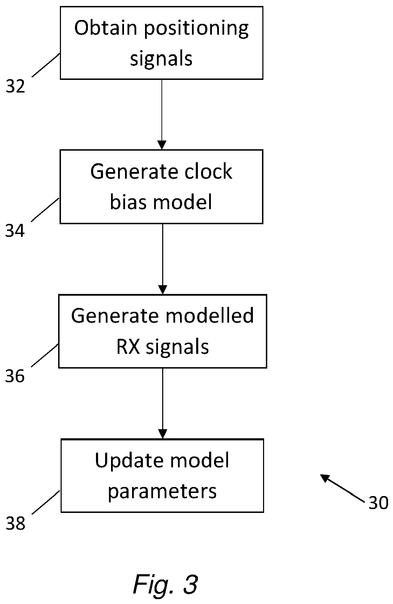

FIG. 3 is a flow chart showing an algorithm in accordance with an example embodiment. The algorithm 30 may be implemented at the reference device 14 or the PRU 22 described above.

The algorithm 30 starts at operation 32 where plurality (e.g. a block) of transmitted reference signals are obtained or received. The reference signals are transmitted by a node of a mobile communication system (e.g. the transmitter 12 or 21) and are associated with a clock signal. The reference signals may comprise PRS, SRS, demodulation reference signals (DMRS), Channel State Information Reference Signals (CSI-RS), sidelink positioning reference signals (SL-PRS) or some other positioning data and may take the form of uplink, downlink or sidelink transmissions. Thus, the reference signals transmitted in the operation 32 may be the reference signals 25 described above.

At operation 34, a clock bias model is generated (e.g. at the reference device 14, the PRU 22, or elsewhere). The clock bias model seeks to model a time variable clock bias (e.g. clock drift) of the clock signal for said plurality of transmitted reference signals. Accordingly, the operation 34 is an example of the operation 26 described above. The clock bias model has a number of unknown parameters, as discussed further below.

As discussed further below, the clock bias model generated in the operation 34 comprises one or more parameters. The clock bias model may be used to predict clock drift at different time points.

At operation 36, modelled received signals are generated. Each modelled received signal is based on one of the transmitted reference signals (on which the signals obtained in the operation 32 were based) and on the time-variable clock bias, as modelled by the clock bias model generated in the operation 34. The modelled received signals are also based on other information, such as the power of the transmitted reference signal(s), and an estimated channel response between the transmitting node (e.g. the transmitter 12 or 21) and the receiving node (e.g. the reference device 14 or PRU 22).

At operation 38, the parameters of the clock bias model are updated based on the signals obtained in the operation 32 and the modelled signals generated in the operation 36. As discussed in detail below, the clock bias model maybe updated such that the modelled received signals approximate to corresponding received signals.

The parameters of the clock bias model may take many forms. For example, the parameters may include a clock offset parameter and/or a rate of change parameter (e.g. an acceleration parameter).

By way of example, the clock bias model may be:

- Scalar, including an offset.
- Linear, including an offset and a rate of clock drift.
- Second order, including an offset, a rate of clock drift, and a rate of change of clock drift.
- Nth order.

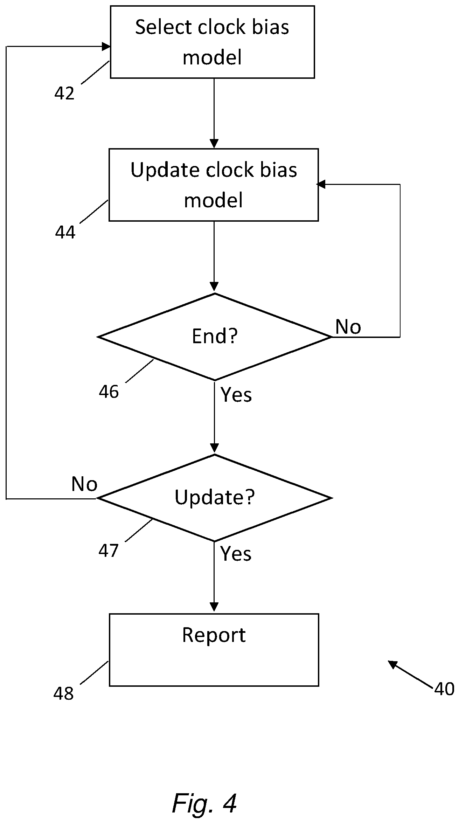

FIG. 4 is a flow chart showing an algorithm, indicated generally by the reference numeral 40, in accordance with an example embodiment.

The algorithm 40 starts at operation 42, where a clock bias model is selected. In some example embodiments, the clock bias model is selected from a plurality of available clock bias models. By way of example, the selection may be based on increasing complexity, e.g. starting with using the simplest model and using a more complicated model if necessary. The skilled person will be aware of alternative methods of selecting a bias model from a plurality of available models.

At operation 44, parameters of the bias model are updated. Then, at operation 46, a determination is made regarding whether the model updating is complete. If so, the algorithm moves to operation 47; otherwise the algorithm returns to operation 44. The updating of the parameters of the clock bias model may be repeated until a termination condition is reached. Example termination conditions include a number of iterations and/or reaching a performance metric. Other termination conditions are possible. Each iteration of the operation 44 may, for example, implement the algorithm 30 described above.

At operation 47, a determination is made regarding whether a model update is required. A model update may be required if, for example, model parameter updating is complete but has failed in some way. If a model update is required, the algorithm returns to operation 42, where a new model is selected. If a model update is not required, the algorithm moves to operation 48.

At operation 48, a report may be provided. The operation 48 may include reporting a clock bias for the received reference signals; such a report may be sent to a location management function (or similar system), as discussed above. Alternatively, or in addition, the operation 48 may include reporting an anticipated clock bias for future reference signals. For example, an anticipated clock bias may be provided for L future reference signals, where L may be decided by a PRU implementing the algorithm 40 and/or by a location management function. Alternatively, or in addition, the report may include details of a clock error or positioning error, as discussed above.

Note that in some example embodiments, one or more of the operations 42, 47 or 48 may be omitted.

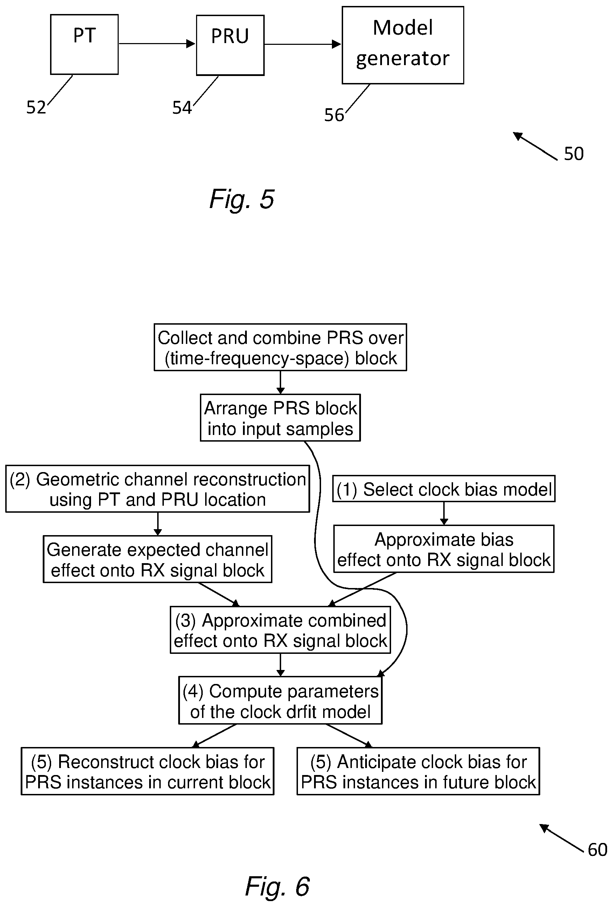

FIG. 5 is a block diagram of a system, indicated generally by the reference numeral 50, in accordance with an example embodiment.

The system 50 comprising a positioning transmitter (PT) 52, a positioning reference unit (PRU) 54 and a model generator 56. The PT 52 and PRU 54 are example implementations of the transmitter 12 and the reference device 14 described above. The model generator 56 may be implemented using a processor or a control module and may be located at the PRU 54 or elsewhere (such as at a server in communication with the PRU 54). The positions of the PT 52 and the PRU 54 are generally known to a high degree of accuracy so that the system geometry can be determined to a similar degree of accuracy.

FIG. 6 is a flow chart showing an algorithm, indicated generally by the reference numeral 60, in accordance with an example embodiment. The algorithm 60 may be implemented using the system 50 describe above.

The proposed method consists of steps 1 to 5, as discussed below (and labelled (1) to (5) in FIG. 6).

Step 1: Selecting a block bias model that models clock drift over a time-frequency-space block of K PRS symbols, where the block size is PT-specific and $K \in \mathbb{N}$. In one example embodiment, the clock drift is modelled by a parameter set, where:

- The first parameter is an initial clock offset; and
- The second parameter is a speed or acceleration (e.g. drift rate or drift speed) characterizing the clock's rate of change for the PRS block.

As discussed elsewhere in this document, different parameter sets (such as higher order parameters) may be used in some example embodiments.

Step 2: The geometry of the system comprising the PT 52 and the PRU 54 is used to approximate the wireless channel response between the PT 52 and the PRU 54. The wireless channel response may comprise the gain and delay of the direct path between the PT and the PRU.

Step 2 may involve generating or retrieving the estimated channel response between the PT 52 and the PRU 54, the estimated channel response being based on a direct path estimate for a system comprising the PT and the PRU (the direct path estimate being based on the geometry of said system). A model generator (such as the model generator 56 of the system 50) may include means for determining the geometry of the system; alternatively, the geometry of the system may be determined elsewhere (e.g. at a server) and provided to the model generator 56 or the PRU 54, or the PRU 54 may infer the geometry (e.g. based on its own (known) location and information regarding the location of the PT location, which may be provided by the relevant LMF).

Step 3: Approximating the received signal at the PRU 54 as the combination of:

- the effect of the propagation over the direct path as obtained from the system geometry (as obtained in step 2); and
- the effect of the time-varying clock drift (as obtained in 1).

The estimate generated in step 3 is based on the transmitter reference signals (which are known), the geometry of the system (which is known) and the modelled time-varying clock drift. If the model is accurate, then estimates generated in step 3 should closely match the respective received signals.

Step 4: Using the output of step 3 to compute the clock bias parameter set by matching the energy between the approximated model from step 3 and the received PRS block. Once Step 4 is complete, the model updating is complete.

Details of a number of example arrangements for implementing step 3 are discussed below. For example, a supervised learning or machine-learning algorithm may be used for updating the parameters of the clock bias model.

Step 5: Using the outputs of steps 4 and 1 to:

- estimate instantaneous clock biases for all PRS instances in the block; and/or
- anticipate the clock biases for the next L PRS instances, where L may be decided by the PRU or by the LMF.

Thus, the algorithm 60 uses a block of positioning reference signal (PRS) resources transmitted by PT 52 to PRU 54, together with knowledge of the geometry of a system comprising the PT and the PRU to estimate and predict the time-variable NR clock drift of the PT 52.

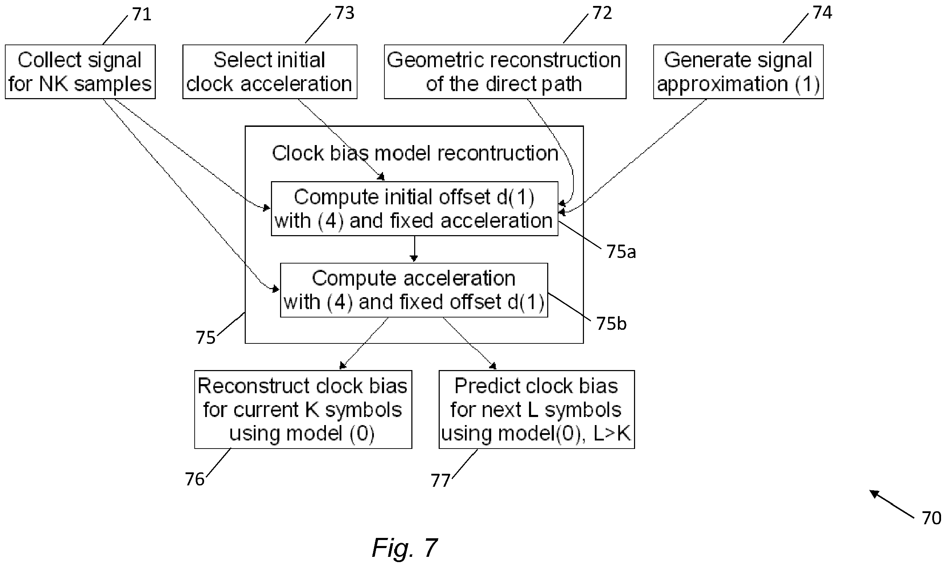

FIG. 7 is a flow chart showing an algorithm, indicated generally by the reference numeral 70, in accordance with an example embodiment. The algorithm 70 provides more detail regarding an example implementation of the algorithm 60.

The algorithm 70 includes a block bias model reconstruction operation 75 that is provided with the outputs of a signal collection operation 71, a direct path reconstruction operation 72 (e.g. the geometric path between PT 52 and PRU 54), an initial clock bias model parameter selection (e.g. clock acceleration setting) operation 73, and a signal approximation operation 74.

As discussed in detail below, the clock bias model reconstruction can be used to reconstruct a clock bias for current symbols (operation 76) and for future symbols (operation 77) (e.g. implementing step (5) and step (6) of the algorithm 60 respectively).

In the algorithm 70, a NR UE has been selected to act as PRU (such as the PRU 54) to estimate the clock bias of a PT, such as the PT 52 (e.g. TRP or UE).

Next, the PT is triggered to send a block of K>=i beamed PRS (or some other reference signal) to the PRU (which signals are collected in the signal collection operation 71). The PRS block may designate a set of PRS symbols over a time-window, a band-window, a carrier frequency, a beam pair, or a combination thereof. In other words, the designated PRS resources may be combined across symbols, carriers and or beams to produce the clock bias parameters of the PT.

During PRS symbol k, k = i:K, the PT 52 introduces an unknown clock bias $d(k)$ to the transmit signal $s_k$:

$$d(k) = d(1) + (k-1)\lambda T \quad (Eq.\,0)$$

i.e., the PT 52 sends $s_k(t + d(k))$, where:

- d(1) is an initial unknown offset;
- k is the PRS symbol index;
- $\lambda$ is the unknown rate of change of the clock bias; and
- $T$ [s] is the OFDM symbol duration.

The initial offset d(1) and the rate of change $\lambda$ are examples of parameters of the clock bias model that we are seeking to determine.

The signal travels over a channel with response composed of G paths:

$$h(t) = \sum_{g=1:G} \alpha_g \delta(t - \tau_g) = \alpha_0 \delta(t - \tau_0) + v(t)$$

where the first term is the line of sight (LOS) path, i.e. $\alpha_0$ is the gain and $\tau_0$ is time of arrival (TOA) and the second term sums up all other reflections.

The PRU 54 receives a beamformed signal:

$$y_k(t) = (s_k * h)(t) + awgn(t)$$

which is the convolution between the transmit signal and the channel, corrupted by noise (AWGN in this example).

The signal is sampled at a rate 1/Ts, where Ts is the sampling time of the system, and the resulting samples are collected in the vector of size N

$$y_k = \left[ y_k(0), ..., y_k((N-1)T_s) \right]^T$$

where the operator $[\cdot]^T$ denotes transposition and N denotes the total number of samples within a symbol time so that $T = NT_s$.

Next, we approximate the n-th received sample, where $n = 0: N - 1$ as:

$$y_k(nT_s) \approx \alpha_0 \exp(j2\pi f_c \tau_0) s_k \left(nT_s - \left(\tau_0 + d(k)\right)\right) + \epsilon_k(nT_s) \quad (Eq.\,1)$$

Where we assume that:

- due to the beamformed nature of the PRS TX/RX, the channel seen by the PRU is dominated by a single relevant path.
- The received signal's phase ($j2\pi f_c \tau_0$) is dominated by the delay of the main path.
- $\epsilon_k(t)$ is AWGN received at symbol k.

Note that the PRU 54 knows:

- The location of the PRU (i.e. its own location);
- The location of the transmitter (PT 52);
- The transmit power P of positioning reference signal (PRS) transmitted by the PT 52; and
- The PRS signal s.

Using the known locations of the PRU and the PT, the PRU can compute (as part of the direct path reconstruction operation 72 of the algorithm 70) the distance $D_0$ to the PT. The time of arrival (TOA) for the PRS signal s can be determined as: $\tau_0 = \dfrac{D_0}{c}$ , where c is the speed of light in vacuum.

Using the transmit power P, distance $D_0$, and a selected path-loss model (e.g. Friis model), the PRU 54 or model generator 56 can then compute the gain of the direct signal $\alpha_0 \propto \dfrac{P}{D_0}$ , where "$\propto$" indicates a known proportionality relation.

In the signal collection operation 71 of the algorithm 70, the PRU collects K PRS symbols (of N samples each) and seeks to estimate an initial clock bias d(1) and the rate of change $\lambda$ using the:

- collected samples $y_k(nT_s)$, $n \in \mathbb{N}_0 : 0 \leq n \leq N-1$ ;
- models proposed in equations (o) and (1); and
- pre-computed quantities $\tau_0$, $\alpha_0$ from the geometric reconstruction model.

Note that number of symbols K may be TP-specific and indicated by the network. Alternatively, the PRU may choose autonomously the number K, e.g., proportional to the PRU velocity.

To solve the clock bias estimation problem, we need to estimate the initial offset d(1) and the acceleration $\lambda$.

To that end, we introduce (Eq. 0) in (Eq. 1), then pose the following optimization problem:

$$\widehat{d(1)}, \widehat{\lambda} = \arg \min_{d(1),\lambda} \sum_{k=1:K} \sum_{n=0:N-1} \Big| y_k(nT_s)$$

$$- \alpha_0 \exp(j2\pi f_c \tau_0) s_k \left(nT_s - (\tau_0 + d(1) + (k-1)\lambda T)\right) \Big|^2 \quad (Eq.\,2)$$

To solve (2), in one embodiment, we can use an available numerical solver e.g. implementing Newton's method. This can be done, for example, by iterating between updating d (and keeping lambda fixed), see the operation 75a, and updating lambda (and keeping d fixed), see the operation 75b. So, we can take the function to be minimized in equation 2 as input to a numerical solver, that solves (2) for d first (having lambda), and then solves equation 2 for lambda (using the recent estimate of d).

Once the clock bias model parameters d(1) and $\lambda$ have been estimated, the bias at each symbol k=i:K can be reconstructed (operation 76). Similarly, a clock bias for the next L symbols can be predicted, where L may be set by the network (operation 77).

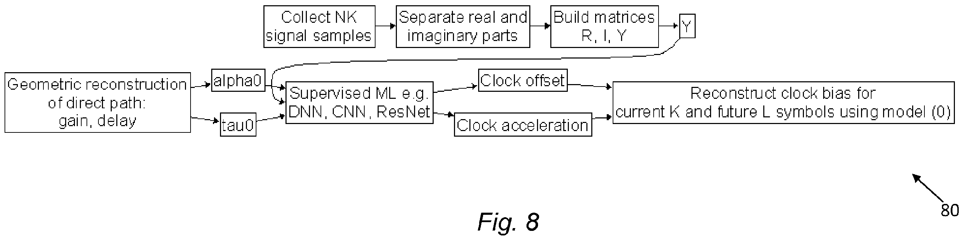

FIG. 8 is a flow chart showing an algorithm, indicated generally by the reference numeral 80, in accordance with an example embodiment.

The algorithm 80 shows an embodiment in which the model (Eq. 1) described above is used in conjunction with a supervised learning method e.g. implementing a neural network (CNN, DNN, ResNet etc.).

The algorithm 80 receives as input the samples $y_k(nT_s)$, k = 1:K,n = 0:N - 1 organized into a matrix containing the real and imaginary parts of the samples:

$$Y = \begin{pmatrix} R \\ I \end{pmatrix},$$

$$R = \begin{pmatrix} Re\{y_1(T_s)\} & \dots & Re\{y_k(T_s)\} \\ \vdots & \ddots & \vdots \\ Re\{y_1((N-1)T_s)\} & \dots & Re\{y_k((N-1)T_s)\} \end{pmatrix}$$

$$I = \begin{pmatrix} Im\{y_1(T_s)\} & \dots & Im\{y_k(T_s)\} \\ \vdots & \ddots & \vdots \\ Im\{y_1((N-1)T_s)\} & \dots & Im\{y_k((N-1)T_s)\} \end{pmatrix}$$

Next the pair $[\widehat{d(1)}, \hat{\lambda}]$ are output by implementing an output layer with two activation functions (e.g. ReLU, linear activation function, etc.):

- a first output to produce the offset $\widehat{d(1)}$; and
- a second output for the acceleration estimate $\hat{\lambda}$.

Finally, having estimated the model parameters, the clock bias may be reconstructed (for current samples) and predicted for the next L samples.

In another embodiment, the received signal $y_k$ is convolved with the transmitted sequence and the resulting signal is approximated as:

$$r_k \approx \sum_{n=0}^{N-1} \alpha_0 \exp(j2\pi f_c \tau_0) \Gamma_k(nT_s - (\tau_0 + d(1) + (k-1)\lambda T)) + \epsilon_k(nT_s) \quad (Eq.\,5)$$

Where $\Gamma_k$ is the known autocorrelation of the transmitted k-th symbol. Then, instead of (4), we minimize the residual power by solving:

$$\widehat{d(1)}, \hat{\lambda} = \arg\min_{d(1),\lambda} \sum_{k=1:K} (|r_k|^2$$

$$-|\sum_{n=0:N-1} \alpha_0 \Gamma_k(nT_s - (\tau_0 + d(1) + (k-1)\lambda T))|^2) \quad (Eq.\,6)$$

To solve (Eq. 6), in one embodiment, we can use an available numerical solver e.g. implementing Newton's method.

In another embodiment, the received signals may be collected across antennas and/or carriers and concatenated into a signal vector $y_k$ corresponding to the k-th PRS resource as seen by all antennas and at all carriers. Then, the example embodiments described above may be straightforwardly implemented.

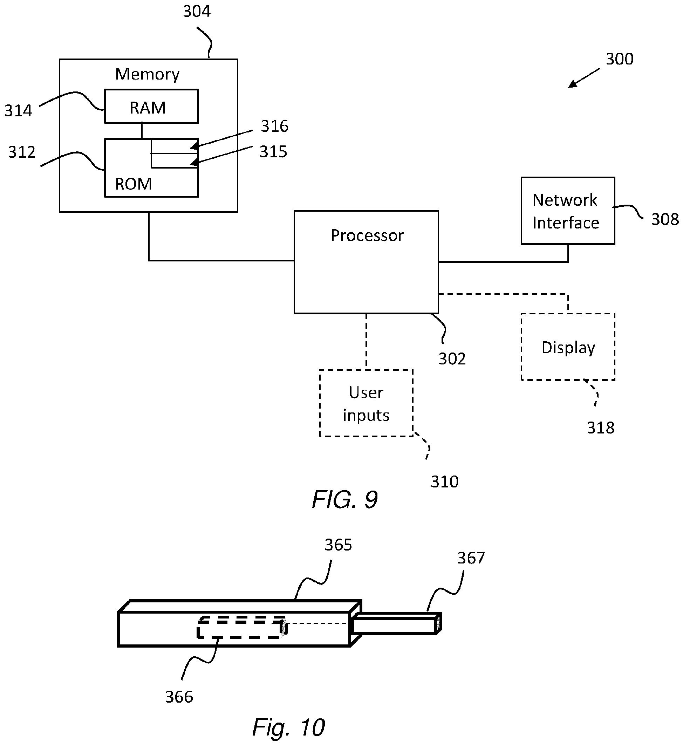

For completeness, FIG. 9 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods and algorithms 20, 30, 40, 60, 70 and 80 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 10 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and messages flow sequences of FIGS. 2 to 4 and 6 to 8 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising:

   means for receiving or obtaining plurality of reference signals, wherein the reference signals are transmitted by a node of a mobile communication system, wherein said reference signals are associated with a clock signal;
   means for generating a clock bias model for characterising a time variable clock bias of said clock signal for said plurality of reference signals, wherein said clock bias model comprises one or more parameters;
   means for generating modelled received signals, wherein each modelled received signal is based on one of the reference signals, a transmit power of said one of the reference signals, an estimated channel response between the node and said apparatus, and the time-variable clock bias; and
   means for updating the parameters of the clock bias model so that the modelled received signals approximate to corresponding received signals.

2. An apparatus as claimed in claim 1, wherein the clock bias model comprises a clock offset parameter.

3. An apparatus as claimed in claim 1 or claim 2, wherein the clock bias model comprises a rate of change parameter.

4. An apparatus as claimed in any one of claims 1 to 3, wherein said means for updating the parameters of the clock bias model is configured to repeat the updating of said parameters until a termination condition is reached.

5. An apparatus as claimed in any one of the preceding claims, further comprising;
   means for reporting a clock bias for the received reference signals.

6. An apparatus as claimed in any one of the preceding claims, further comprising:
   means for reporting an anticipated clock bias for future reference signals.

7. An apparatus as claimed in any one of the preceding claims, further comprising:
   means for using the clock bias model to perform at least one of: determining or reporting a clock error; or determining or reporting a positioning error associated with the plurality of reference signals.

8. An apparatus as claimed in any one of the preceding claims, further comprising:
   means for selecting a clock bias model from one of a plurality of available clock bias models.

9. An apparatus as claimed in any one of the preceding claims, further comprising means for generating or retrieving the estimated channel response between the node and said apparatus, wherein the estimated channel response is based on a direct path estimate for a system comprising the node and said apparatus, wherein the direct path estimate is based on a geometry of said system.

10. An apparatus as claimed in claim 9, further comprising means for determining the geometry of the system.

11. An apparatus as claimed in any one of the preceding claims, further comprising a machine-learning or supervised-learning algorithm for updating the parameters of the clock bias model.

12. An apparatus as claimed in any one of the preceding claims, wherein the apparatus is a unit of the mobile communication system whose location is considered known.

13. A method comprising:

    receiving or obtaining plurality of reference signals, wherein the reference signals are transmitted by a node of a mobile communication system, wherein said reference signals are associated with a clock signal;
    generating a clock bias model for characterising a time variable clock bias of said clock signal for said plurality of reference signals, wherein said clock bias model comprises one or more parameters;
    generating modelled received signals, wherein each modelled received signal is based on one of the reference signals, a transmit power of said one of the reference signals, an estimated channel response between the node and said apparatus, and the time-variable clock bias; and
    updating the parameters of the clock bias model so that the modelled received signals approximate to corresponding received signals.

**14.** A method as claimed in claim 13, further comprising at least one of:

reporting a clock bias for the received reference signals;
reporting an anticipated clock bias for future reference signals;
determining or reporting a clock error associated with the plurality of reference signals; or
determine or reporting a positioning error associated with the plurality of reference signals.

**15.** A computer program comprising instructions for causing an apparatus to perform at least the following:

receiving or obtaining plurality of reference signals, wherein the reference signals are transmitted by a node of a mobile communication system, wherein said reference signals are associated with a clock signal;
generating a clock bias model for characterising a time variable clock bias of said clock signal for said plurality of reference signals, wherein said clock bias model comprises one or more parameters;
generating modelled received signals, wherein each modelled received signal is based on one of the reference signals, a transmit power of said one of the reference signals, an estimated channel response between the node and said apparatus, and the time-variable clock bias; and
updating the parameters of the clock bias model so that the modelled received signals approximate to corresponding received signals.

*Fig. 1*

*Fig. 2*

Obtain positioning
signals

32

Generate clock
bias model

34

Generate modelled
RX signals

36

Update model
parameters

38

30

*Fig. 3*

*Fig. 4*

PT 52

PRU 54

Model generator 56

50

*Fig. 5*

Collect and combine PRS over (time-frequency-space) block

Arrange PRS block into input samples

(2) Geometric channel reconstruction using PT and PRU location

(1) Select clock bias model

Generate expected channel effect onto RX signal block

Approximate bias effect onto RX signal block

(3) Approximate combined effect onto RX signal block

(4) Compute parameters of the clock drfit model

(5) Reconstruct clock bias for PRS instances in current block

(5) Anticipate clock bias for PRS instances in future block

60

*Fig. 6*

EP 4 358 605 A1

```
┌──────────────┐  ┌──────────────┐  ┌─────────────────────┐  ┌──────────────┐
│ Collect signal│  │ Select initial│  │Geometric reconstruction│  │ Generate signal│
│ for NK samples│  │clock acceleration│  │  of the direct path │  │approximation (1)│
└──────────────┘  └──────────────┘  └─────────────────────┘  └──────────────┘
        71              73                    72                     74
```

Clock bias model recontruction

Compute initial offset d(1) with (4) and fixed acceleration    75a

Compute acceleration with (4) and fixed offset d(1)    75b

75

Reconstruct clock bias for current K symbols using model (0)    76

Predict clock bias for next L symbols using model(0), L>K    77

70

*Fig. 7*

*Fig. 8*

304

Memory

314 — RAM

316
315

312 —

ROM

Processor

Network
Interface

308

300

302

User
inputs

Display

318

310

*FIG. 9*

365

367

366

*Fig. 10*

Europäisches
Patentamt

European
Patent Office

Office européen
des brevets

# EUROPEAN SEARCH REPORT

Application Number

EP 22 20 2143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEIJUN YANG ET AL: "An integrity monitoring method of satellite clock bias using Shewhart Control Chart", 2013 INTERNATIONAL WORKSHOP ON MICROWAVE AND MILLIMETER WAVE CIRCUITS AND SYSTEM TECHNOLOGY, IEEE, 24 October 2013 (2013-10-24), pages 384-387, XP032595178, DOI: 10.1109/MMWCST.2013.6814530 [retrieved on 2014-05-12] * the whole document * | 1-15 | INV. H04W56/00 G01S19/30 |
| A | WO 2018/142408 A1 (ISRAEL AEROSPACE IND LTD [IL]) 9 August 2018 (2018-08-09) * the whole document * | 1-15 | |

TECHNICAL FIELDS SEARCHED (IPC)

H04W
G01S

The present search report has been drawn up for all claims

| Place of search | Date of completion of the search | Examiner |
|---|---|---|
| The Hague | 16 March 2023 | Larcinese, Annamaria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 20 2143**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-03-2023**

| Patent document cited in search report | Publication date | Patent family member(s) | Publication date |
|---|---|---|---|
| WO 2018142408 A1 | 09-08-2018 | NONE | |

For more details about this annex : see Official Journal of the European Patent Office, No. 12/82

EPO FORM P0459